# EUROPEAN PATENT APPLICATION

(11) **EP 4 152 439 A1**
(43) Date of publication of application: **22.03.2023**
(21) Application number: 22158505.2
(22) Date of filing: 24.02.2022
(51) Int. Cl.: H01M 4/131, H01M 4/36, H01M 4/485, H01M 10/0587, H01M 10/04, H01M 50/262, H01M 50/103, H01M 10/0525, H01M 4/02, B60L 50/64, C01G 33/00

(54) **SECONDARY BATTERY, BATTERY MODULE, AND VEHICLE**

(30) Priority: 15.09.2021 JP 2021150403
(71) Applicant: KABUSHIKI KAISHA TOSHIBA, Minato-ku Tokyo 105-0023 (JP)
(72) Inventor: Namiki, Yusuke, Tokyo, 105-0023 (JP); Yanagi, Masato, Tokyo, 105-0023 (JP); Yoshima, Kazuomi, Tokyo, 105-0023 (JP); Ishibashi, Mitsuru, Tokyo, 105-0023 (JP); Hoshina, Keigo, Tokyo, 105-0023 (JP); Harada, Yasuhiro, Tokyo, 105-0023 (JP); Takami, Norio, Tokyo, 105-0023 (JP); Watanabe, Hidetoshi, Tokyo, 105-0023 (JP); Yasuda, Kazuhiro, Tokyo, 105-0023 (JP)
(74) Representative: Hoffmann Eitle

(57) **Abstract**

According to one embodiment, a secondary battery (100)is provided. The secondary battery (100) includes a wound electrode group (2) including a positive electrode (5), a negative electrode (6) containing a negative electrode active material, and a separator (7), and a container member (1) accommodating the wound electrode group (2). The negative electrode active material contains a niobium-titanium composite oxide. A proportion (R_{black}) determined by the X-ray CT for the wound electrode group is within the range of 0.10% or more and 2.0% or less.

## Description

### FIELD

The present disclosure relates generally to a secondary battery, a battery module, and a vehicle.

### BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are expected as a power source for vehicles such as hybrid electric automobiles and electric automobiles, an uninterruptible power supply for base stations for portable telephones, or the like. Also, because of the rapidly increasing demand for power sources for mobile services such as an autonomous-traveling industrial robot and a drone, the secondary batteries are required not only to have a high energy density, but also to have other performances such as rapid charge-discharge performances and long-term reliability.

Materials containing Ti and Nb have been studied as electrode materials for secondary batteries. Such a niobium-titanium composite oxide material is expected to have a high charge-discharge capacity. However, the niobium-titanium composite oxide material causes volume expansion and contraction during rapid charge and charge-and-discharge cycles. This is because the skeleton of the crystal structure changes significantly due to the insertion/extraction of lithium ions to/from the crystal structure. The expansion and contraction causes a problem that the electrode is slightly deformed and that the battery performance is also changed.

### BRIEF DESCRIPTION OF THE DRAWINGS

FIG. 1 is a developed perspective view schematically illustrating an example of a secondary battery according to an approach;
FIG. 2 is a partially developed perspective view of the secondary battery illustrated in FIG. 1 as viewed from below;
FIG. 3 is a partially developed perspective view of an electrode group used in the secondary battery illustrated in FIG. 1;
FIG. 4 is a partially developed perspective view of the secondary battery illustrated in FIG. 1 as viewed from above;
FIG. 5 is a cross-sectional image obtained by X-ray CT on a secondary battery according to an Example;
FIG. 6 is an image obtained by binarizing the cross-sectional image according to FIG. 5;
FIG. 7 is a front view schematically illustrating a state in which a secondary battery according to an approach is restrained;
FIG. 8 is a side view schematically illustrating a state in which the secondary battery according to the approach is restrained;
FIG. 9 is a perspective view of the secondary battery illustrated in FIG. 1;
FIG. 10 is a developed perspective view schematically illustrating an example of a battery module according to an approach;
FIG. 11 is a cross-sectional view schematically illustrating the battery module illustrated in FIG. 10;
FIG. 12 is a cross-sectional view schematically illustrating an example of a vehicle according to an approach;
FIG. 13 is an X-ray CT image of a cross section orthogonal to a winding axis of a wound electrode group included in a secondary battery of an example according to a Comparative Example; and
FIG. 14 is an image obtained by binarizing the cross-sectional image according to FIG. 13.

### DETAILED DESCRIPTION

According to an approach, a secondary battery is provided. The secondary battery includes a wound electrode group including a positive electrode, a negative electrode containing a negative electrode active material, and a separator, and a container member accommodating the wound electrode group. The negative electrode active material contains a niobium-titanium composite oxide. A proportion (R_{black}) determined by the following method is within the range of 0.10% or more and 2.0% or less. The proportion (R_{black}) is determined by a method including: obtaining 800 cross-sectional images orthogonal to a winding axis of the wound electrode group by X-ray CT; after converting each of the 800 cross-sectional images into monochrome 256 gradations, setting a threshold value and binarizing the 800 cross-sectional images so that portions corresponding to the positive electrode, the negative electrode, and the separator form white portions, and that a void portion that may exist inside the wound electrode group forms a black portion; determining a proportion of an area (Sb) of the black portion to an area (St) of the wound electrode group defined by an outer periphery of the wound electrode group in each of the binarized 800 cross-sectional images; and simply averaging a plurality of the proportions obtained in each of the 800 cross-sectional images.

According to another approach, a battery module is provided. The battery module includes the secondary battery according to the approach.

According to another approach, a vehicle is provided. The vehicle includes the battery module according to the approach.

According to at least one of the approaches described above, it is possible to provide a secondary battery having low self-discharge and low resistance.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in a device actually used, but they can be appropriately design-changed considering the following explanations and known technology.

### (First approach)

According to a first approach, a secondary battery is provided. The secondary battery includes a wound electrode group including a positive electrode, a negative electrode containing a negative electrode active material, and a separator, and a container member accommodating the wound electrode group. The negative electrode active material contains a niobium-titanium composite oxide. A proportion (R_{black}) determined by the following method is within the range of 0.10% or more and 2.0% or less. The proportion (R_{black}) is determined by a method including: obtaining 800 cross-sectional images orthogonal to a winding axis of the wound electrode group by X-ray CT; after converting each of the 800 cross-sectional images into monochrome 256 gradations, setting a threshold value and binarizing the 800 cross-sectional images so that portions corresponding to the positive electrode, the negative electrode, and the separator form white portions, and that a void portion that may exist inside the wound electrode group forms a black portion; determining a proportion of an area (Sb) of the black portion to an area (St) of the wound electrode group defined by an outer periphery of the wound electrode group in each of the binarized 800 cross-sectional images; and simply averaging a plurality of the proportions obtained in each of the 800 cross-sectional images.

A lattice volume of the niobium-titanium composite oxide changes due to the insertion and extraction of lithium ions as the secondary battery is charged and discharged. Therefore, when the negative electrode containing the niobium-titanium composite oxide is repeatedly charged and discharged, an active material-containing layer expands and contracts. In particular, the volume change of the niobium-titanium composite oxide is the largest when the secondary battery is initially charged. Immediately after the manufacture of the secondary battery (before the initial charge), electrode materials such as active material particles constituting the active material-containing layer are distributed in the layer at a relatively uniform density. However, when this secondary battery is subjected to initial charge, a large difference between the density of the electrode materials in a certain part of the layer and the density of the electrode materials in other parts of the layer may be caused by the volume expansion of the niobium-titanium composite oxide.

On the other hand, at the time of manufacturing a wound electrode group in which a negative electrode, a separator, and a positive electrode having a band shape and a sheet shape are wound, these sheets are generally wound so as not to form a gap between them. After that, the wound electrode group is housed in a container member having a predetermined volume. From the viewpoint of increasing the battery capacity, there is no or almost no gap between the side wall of the container member and the wound electrode group.

Therefore, when the wound electrode group containing no extra gap is subjected to the initial charge, wrinkles may be formed in at least a part of the wound electrode group because of the occurrence of uneven expansion of a negative electrode active material-containing layer, or the absence of a stress escape place due to the expansion of the negative electrode active material-containing layer. The present inventors have focused on a degree of wrinkle formation and found that, by controlling the degree of wrinkle formation, a secondary battery having low self-discharge and low resistance can be obtained.

The degree of wrinkle formation on the wound electrode group is evaluated based on tomography by X-ray CT. When multiple tomography by X-ray CT is performed along a winding axis direction of the wound electrode group, a plurality of black-and-white images (grayscale images) showing a cross section of the wound electrode group can be obtained. In other words, a plurality of cross-sectional images orthogonal to the winding axis of the wound electrode group can be obtained. In each of the cross-sectional images, portions corresponding to the negative electrode, the positive electrode and the separator constituting the wound electrode group are mainly shown in white, and portions corresponding to voids formed by the wrinkles are mainly shown in black. By binarizing this cross-sectional image under predetermined conditions and calculating a proportion of an area of the black portions corresponding to the wrinkles to a cross-sectional area of the wound electrode group, the degree of wrinkle formation can be quantitatively evaluated. The specific evaluation method will be described later, but, at the time of performing X-ray CT, a plurality of cross-sectional images different in position along the winding axis direction are prepared by tomography in order to evaluate the degree of wrinkle formation over the entire wound electrode group. Specifically, 800 cross-sectional images are prepared. The degree of wrinkle formation is evaluated by calculating the above proportion for each image and using an average value obtained by simply averaging these proportions. This average value is also referred to as "proportion (R_{black})" in the present specification and the claims.

In a secondary battery according to an approach, the proportion (R_{black}) of the area of the black portions to the cross-sectional area of the wound electrode group is in the range of 0.10% or more and 2.0% or less. The smaller this proportion, the fewer the wrinkles contained in the wound electrode group. When the proportion (R_{black}) is less than 0.10%, it can be determined that the wound electrode group contains almost no wrinkles. In this case, after the initial charge of the secondary battery, adhesion of each member constituting the wound electrode group is high. Therefore, for example, an excessive amount of a film generated by a side reaction with an electrolytic solution is present on a surface of the material constituting the negative electrode active material-containing layer. As a result, the battery resistance is high. On the other hand, when the proportion (R_{black}) exceeds 2.0%, it can be determined that too many wrinkles are contained in the wound electrode group. In this case, the amount of films present on the surfaces of the positive and negative electrodes is small. Therefore, although the battery resistance is relatively low, self-discharge occurs excessively, which is not preferable.

The proportion (R_{black}) is preferably in the range of 0.15% to 1.50%, and more preferably in the range of 0.30% to 0.80%.

A secondary battery according to an example will be described with reference to the drawings, but the mode of the secondary battery is not limited thereto.

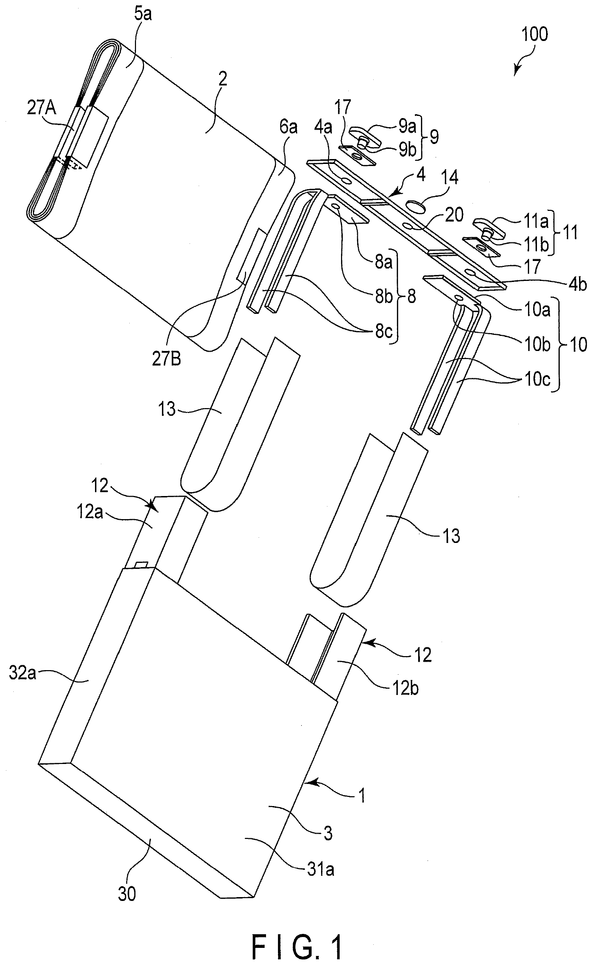

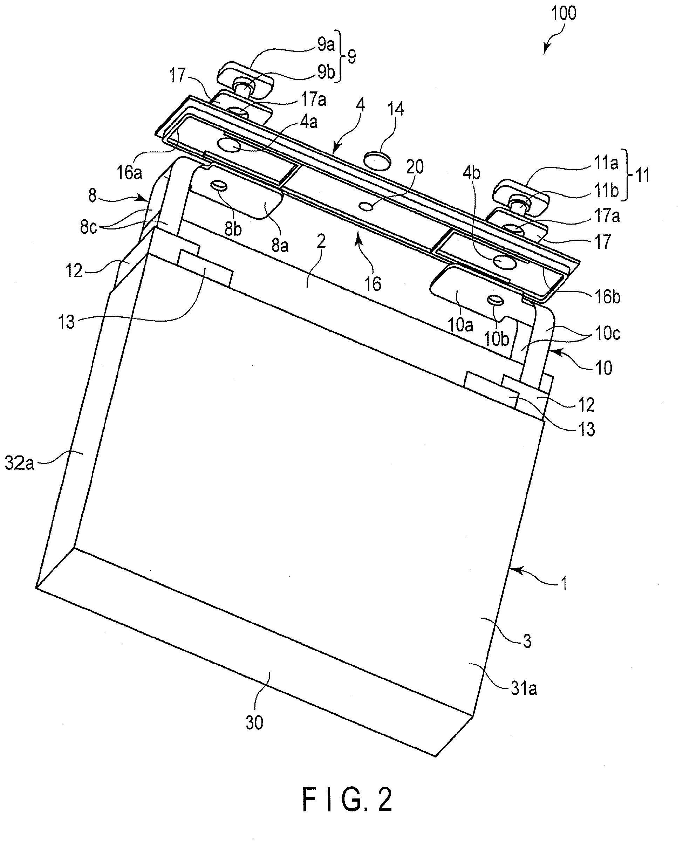

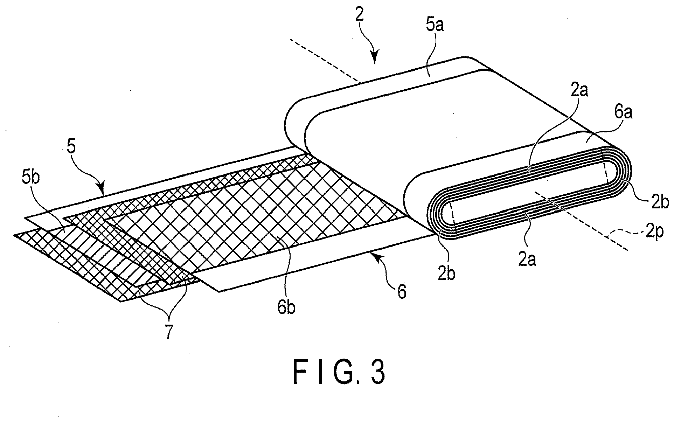

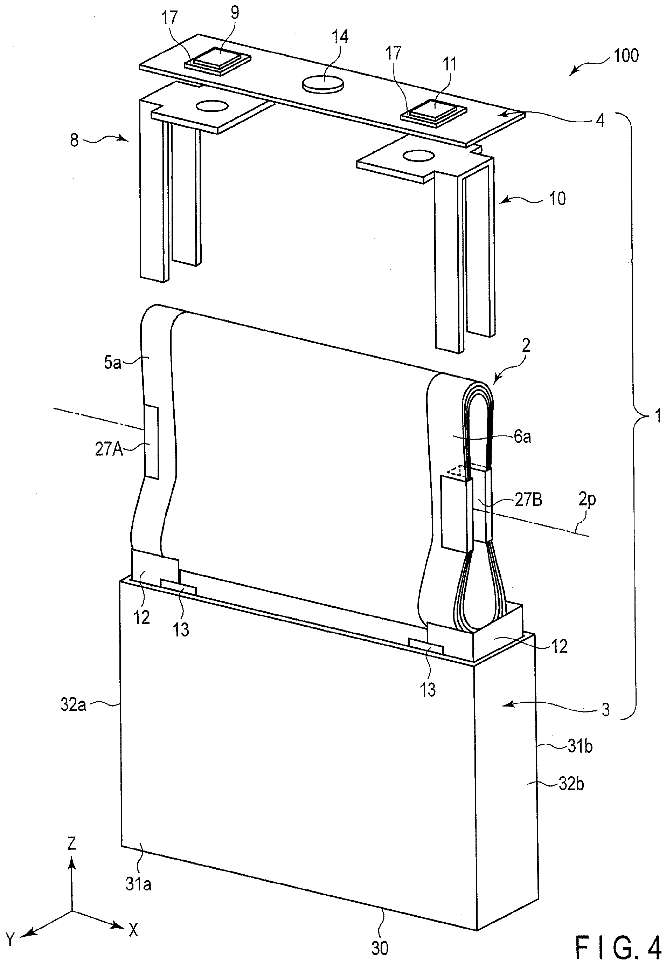

FIG. 1 is a developed perspective view of a secondary battery according to an approach. FIG. 2 is a partially developed perspective view of the secondary battery illustrated in FIG. 1 as viewed from below. FIG. 3 is a partially developed perspective view of an electrode group used in the secondary battery illustrated in FIG. 1. FIG. 4 is a partially developed perspective view of the secondary battery illustrated in FIG. 1 as viewed from above. The secondary battery may be, for example, a lithium secondary battery or a nonaqueous electrolyte secondary battery containing a nonaqueous electrolyte.

A secondary battery 100 includes a container member 1, a wound electrode group 2 accommodated in the container member 1, and a nonaqueous electrolytic solution (not illustrated) impregnated in the wound electrode group 2. The container member 1 has a bottomed square tube type container 3 and a sealing plate 4 fixed to an opening of the container 3, for example, by welding. A shape of the container member is not particularly limited as long as the wound electrode group can be housed, but the container member has, for example, a rectangular parallelepiped shape or a cube shape. The secondary battery 100 can be, for example, a closed square nonaqueous electrolyte secondary battery.

As illustrated in FIG. 3, in the wound electrode group 2, a positive electrode 5 and a negative electrode 6 are wound in a flat shape around a virtual winding axis 2p with a separator 7 interposed therebetween. The positive electrode 5 includes, for example, a band-shaped positive electrode current collector made of a metal foil, a positive electrode current-collecting tab 5a formed from one end parallel to a long side of the positive electrode current collector, and a positive electrode active material layer 5b formed on the positive electrode current collector, at least, except a portion of the positive electrode current-collecting tab 5a. On the other hand, the negative electrode 6 includes, for example, a band-shaped negative electrode current collector made of a metal foil, a negative electrode current-collecting tab 6a formed from one end parallel to a long side of the negative electrode current collector, and a negative electrode active material layer 6b formed on the negative electrode current collector, at least, except a portion of the negative electrode current-collecting tab 6a.

The positive electrode 5, the separator 7, and the negative electrode 6 are wound in such a manner that the positive electrode 5 and the negative electrode 6 are displaced from each other so that the positive electrode current-collecting tab 5a protrudes from the separator 7 in the winding axis 2p direction of the electrode group, and that the negative electrode current-collecting tab 6a protrudes from the separator 7 in the opposite direction. As a result of such winding, as illustrated in FIG. 3, in the electrode group 2, the spirally wound positive electrode current-collecting tab 5a protrudes from one end face, and the spirally wound negative electrode current-collecting tab 6a protrudes from the other end face.

The wound electrode group 2 includes two flat portions 2a in which the positive electrode 5, the separator 7 and the negative electrode 6 are stacked flat, and two curved portions 2b in which the positive electrode 5, the separator 7 and the negative electrode 6 are stacked in a curved state. The two flat portions 2a face each other with the winding axis 2p as a boundary. The two curved portions 2b face each other via the two flat portions 2a.

As illustrated in FIGS. 1 and 2, a positive electrode lead 8 has a connection plate 8a for electrical connection to a positive electrode terminal 9, a through hole 8b opened in the connection plate 8a, and strip-shaped current collecting portions 8c bifurcated from the connection plate 8a and extending downward. The current collecting portions 8c of the positive electrode lead 8 sandwich the positive electrode current-collecting tab 5a of the electrode group 2 between them, and are electrically connected to the positive electrode current-collecting tab 5a by welding. On the other hand, a negative electrode lead 10 has a connection plate 10a for electrical connection to a negative electrode terminal 11, a through hole 10b opened in the connection plate 10a, and strip-shaped current collecting portions 10c bifurcated from the connection plate 10a and extending downward. The current collecting portions 10c of the negative electrode lead 10 sandwich the negative electrode current-collecting tab 6a of the electrode group 2 between them, and are electrically connected to the negative electrode current-collecting tab 6a by welding. A method of electrically connecting the positive and negative electrode leads 8 and 10 to the positive and negative electrode current-collecting tabs 5a and 6a is not particularly limited, and examples thereof include welding such as ultrasonic welding and laser welding.

An electrode guard 12 has a side wall 12a that covers the end faces of the positive and negative electrode current-collecting tabs 5a and 6a, and a side wall 12b that is curved in a U shape so as to cover the outermost peripheries of the positive and negative electrode current-collecting tabs 5a and 6a. An upper end of the electrode guard 12 is opened to accommodate the electrode group 2 from there. The positive electrode current-collecting tab 5a of the electrode group 2 is covered with the electrode guard 12 in a state where the current collecting portions 8c of the positive electrode lead 8 are welded. The connection plate 8a of the positive electrode lead 8 is located above the electrode guard 12. On the other hand, the negative electrode current-collecting tab 6a of the electrode group 2 is covered with the electrode guard 12 in a state where the current collecting portions 10c of the negative electrode lead 10 are welded. The connection plate 10a of the negative electrode lead 10 is located above the electrode guard 12. The two electrode guards 12 are fixed to the electrode group 2 by an insulating tape 13.

As illustrated in FIGS. 1, 2 and 4, the sealing plate 4 has a rectangular plate shape. The sealing plate 4 has through holes 4a and 4b for attaching the positive and negative electrode terminals 9 and 11. Further, the sealing plate 4 has a liquid injection port 20.

The liquid injection port 20 is also used to release the gas generated inside the battery after the electrolytic solution is injected through the liquid injection port 20. The liquid injection port 20 is sealed by a sealing lid 14. The sealing lid 14 is fixed to the surface of the sealing plate 4 by welding, for example. The sealing lid 14 has a disk-shaped shape here, but the shape is not particularly limited as long as the liquid injection port 20 can be sealed. The sealing lid 14 is formed of, for example, a metal such as aluminum or an aluminum alloy.

As illustrated in FIG. 2, an insulating plate 16 is disposed on a back surface of the sealing plate 4. The insulating plate 16 has a recess 16a in which the connection plate 8a of the positive electrode lead 8 is accommodated at one end, and a recess 16b in which the connection plate 10a of the negative electrode lead 10 is accommodated in the other end. There is an opening between the recess 16a and the recess 16b, and the back surface of the sealing plate 4 is exposed. Further, the recess 16a and the recess 16b of the insulating plate 16 have through holes communicating with the through holes 4a and 4b of the sealing plate 4, respectively.

The positive and negative electrode terminals 9 and 11 have rectangular plate-shaped head portions 9a and 11a and shaft portions 9b and 11b extending from the head portions 9a and 11a, respectively. An insulating gasket 17 has a through hole 17a into which the shaft portions 9b and 11b of the positive and negative electrode terminals 9, 11 are inserted. The shaft portion 9b of the positive electrode terminal 9 is inserted into the through hole 17a of the insulating gasket 17, the through hole 4a of the sealing plate 4, the through hole of the insulating plate 16, and the through hole 8b of the connection plate 8a of the positive electrode lead 8, and fixed to these members by caulking. As a result, the positive electrode terminal 9 is electrically connected to the positive electrode current-collecting tab 5a via the positive electrode lead 8. On the other hand, the shaft portion 11b of the negative electrode terminal 11 is inserted into the through hole 17a of the insulating gasket 17, the through hole 4b of the sealing plate 4, the through hole of the insulating plate 16, and the through hole 10b of the connection plate 10a of the negative electrode lead 10, and fixed to these members by caulking. As a result, the negative electrode terminal 11 is electrically connected to the negative electrode current-collecting tab 6a via the negative electrode lead 10.

The container 3 will be described in more detail with reference to FIG. 4. The container 3 includes a bottom wall (container bottom wall) 30 and side walls (container side walls) 31a, 31b, 32a, and 32b. In the container 3, the bottom wall 30 and the side walls 31a, 31b, 32a, and 32b form an accommodation space in which the electrode group 2 is accommodated. The accommodation space is open to one side (upper side) of the container 3 in the Z direction. The opening of the accommodation space is closed by the sealing plate 4.

In the container 3, each of the side walls 31a, 31b, 32a, and 32b extends from the bottom wall 30 to the sealing plate 4 along the Z direction. The bottom wall 30 has a rectangular plate shape having a set of long sides facing each other and a set of short sides facing each other. The long-side side walls 31a and 31b are disposed apart from each other along the Y direction with the accommodation space interposed therebetween. The short-side side walls 32a and 32b are disposed apart from each other in the X direction with the accommodation space interposed therebetween. Further, each of the long-side side wall 31a and 31b extends along the X direction from the short-side side wall 32a to the short-side side wall 32b. Each of the short-side side wall 32a and 32b extends along the Y direction from the long-side side wall 31a to the long-side side wall 31b.

In the container 3, a dimension from an outer surface of the long-side side wall 31a to an outer surface of the long-side side wall 31b is the same as or substantially the same as a dimension in the Y direction of the container 3. A dimension from an outer surface of the short-side side wall 32a to an outer surface of the short-side side wall 32b in the container 3 is the same as or substantially the same as a dimension in the X direction of the container 3. If the thickness of the side walls is constant, the restraining force on the wound electrode group 2 changes by changing the dimension in the Y direction of the container 3 or the dimension in the X direction of the container 3. The dimension in the Y direction of the container 3 and the dimension in the X direction of the container 3 can be controlled by changing the dimensions of the bottom wall 30. A means for restraining the wound electrode group 2 and the like will be described in detail later.

As illustrated in FIG. 4 and FIGS. 1 and 2, the wound electrode group 2 is housed in the container member 1, for example, so that the winding axis 2p is parallel to or substantially parallel to the bottom wall 30 of the container member 1. The wound electrode group 2 may be housed in the container member 1 so that the winding axis 2p is orthogonal to or substantially orthogonal to the bottom wall 30.

It is desirable that the winding axis 2p of the wound electrode group 2 should be parallel to the bottom wall 30 of the container 3 and also parallel to the two long-side side walls 31a and 31b. In other words, in the flat electrode group 2, it is preferable that the two flat portions 2a provided with the winding axis 2p interposed therebetween should face the two long-side side walls 31a and 31b, respectively. In this case, a flat portion of the wound electrode group 2 having a large area is likely to be restrained by the long-side side walls 31a and 31b having a large area. Therefore, in this case, there is an advantage that the amount of wrinkles in the wound electrode group 2 can be easily controlled. A method of adjusting the amount of wrinkles will be described in detail later.

### <X-ray CT condition and binarization condition>

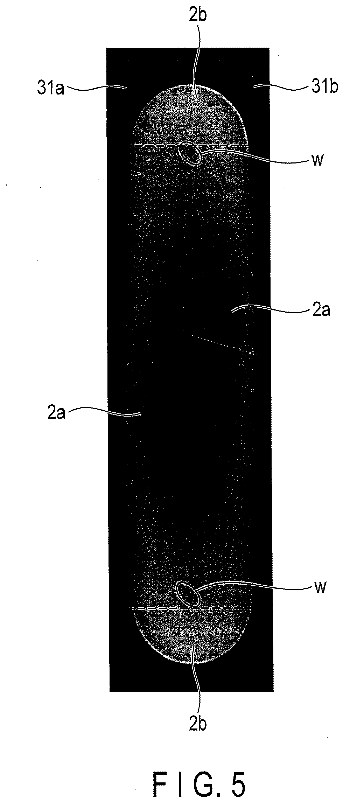

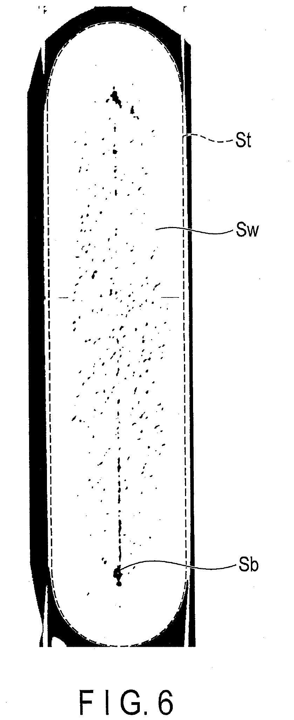

Hereinafter, imaging conditions for X-ray CT and conditions for binarization will be described with reference to images actually captured by X-ray CT. FIG. 5 is an image showing a cross section obtained by performing tomography by X-ray CT on the secondary battery according to Example 1 which will be described later. FIG. 6 is an image obtained by binarizing the image according to FIG. 5 under predetermined conditions.

First, the secondary battery as a target for measurement is installed in an X-ray CT apparatus, the tube voltage is set to 10 to 130 kV, the tube current is set to 10 to 300 µA, and the focal size is set to about 5 µm. As the X-ray CT apparatus, for example, TXS300 Micro manufactured by Tesco or an apparatus having an equivalent function thereto is used. Under these conditions, tomography by X-ray CT will be performed. FIG. 5 is a black-and-white image (grayscale image) of a cross section orthogonal to the winding axis 2p of the wound electrode group 2 according to these conditions. In X-ray CT, 800 cross-sectional images different in capturing position along the winding axis 2p are captured. FIG. 5 is one of the cross-sectional images thus obtained. As for the capturing position along the winding axis 2p, when a length of the wound electrode group 2 along the winding axis 2p is 100%, the images are captured at 800 points or more at intervals of at least 0.125%. It is preferable that the intervals between the images captured by CT scan should be even narrower.

In FIG. 5, the wound electrode group 2 is housed inside the container member 1 having a substantially rectangular cross-sectional shape. The wound electrode group 2 is housed in the container member 1 so that its winding axis (not illustrated) is parallel to the bottom wall 30 of the container member 1 and is also parallel to the two long-side side walls 31a and 31b. The wound electrode group 2 is an electrode group described with reference to FIG. 3 and the like. The wound electrode group 2 may contain at least one wrinkle w.

FIG. 6 is an image obtained by binarizing FIG. 5. In binarization processing, as image processing software, Image J indicated in Non-Patent Document 1 [Dr. Michael et al., Image Processing with ImageJ, Reprinted from the July 2004 issue of Biophotonics International copyrighted by Laurin Publishing Co. INC.] is used. The cross-sectional image is converted into monochrome 256 gradations, and a threshold value is set to binarize the image. The threshold value is set so that, in the cross section of the wound electrode group, portions corresponding to the negative electrode, the separator and the positive electrode are displayed in white, and a portion corresponding to the wrinkle (void) is displayed in black. Next, an area (St) of the wound electrode group 2 defined by an outer periphery of the wound electrode group 2 is obtained. The area St is the sum of an area (Sw) of the white portions and an area (Sb) of the black portion corresponding to the wrinkle before binarization. By dividing the area Sb of the black portion by the area St of the wound electrode group 2 and multiplying the obtained numerical value by 100, a proportion X of the area Sb of the black portion to the area St of the wound electrode group 2 in the binarized image is calculated as a percentage.

The proportion X is calculated by the above operation for each of the 800 images obtained by X-ray CT. Values of a plurality of the calculated proportions X are simply averaged to obtain an average value. This average value is the "proportion (R_{black})".

### <Method for manufacturing secondary battery>

The secondary battery 100 is produced, for example, by the following method. First, the wound electrode group 2 is produced and accommodated in the container member 1. The wound electrode group 2 can be produced, for example, as follows. The positive electrode 5 and the negative electrode 6 are stacked so that the separator 7 is interposed between them to obtain a stack of the positive electrode 5, the negative electrode 6, and the separator 7. After winding this stack, the obtained wound body can be further pressed to produce a flat-shaped wound electrode group 2.

When the wound electrode group 2 is accommodated in the container member 1, specifically, after the produced wound electrode group 2 is dried, the positive and negative electrode leads 8 and 10 are welded to the positive and negative electrode current-collecting tabs 5a and 6a of the electrode group 2. Next, the electrode guard 12 is attached to the positive and negative electrode current-collecting tabs 5a and 6a of the electrode group 2, and the electrode guard 12 is fixed to the electrode group 2 with the insulating tape 13. Next, the positive and negative electrode terminals 9 and 11, the sealing plate 4 and the positive and negative electrode leads 8 and 10 are integrated by caulking and fixing, and then the sealing plate 4 is fixed to the opening of the container member 1 by welding. Thus, the electrode group 2 is accommodated in the container member 1. Further, the positive and negative electrode leads 8 and 10, the electrode guard 12 and the insulating tape 13 are also accommodated in the container member 1. After that, the electrolyte is injected into the container member 1 from the liquid injection port 20, and the liquid injection port 20 is sealed.

Next, after restraining the wound electrode group 2, the secondary battery is subjected to initial charge. When the secondary battery is subjected to the initial charge, lithium ions are inserted into the niobium-titanium composite oxide contained in the negative electrode active material, and the negative electrode active material-containing layer expands. As a result, wrinkles may be formed in at least a part of the wound electrode group. Hereinafter, the restraint of the wound electrode group 2 will be described in detail. If the secondary battery is subjected to the initial charge with the wound electrode group 2 restrained, the wrinkle formation can be suppressed. The "restraint" refers to applying pressure to the secondary battery or wound electrode group. The greater the pressure applied to the wound electrode group 2 by restraint, the more the amount of wrinkles tends to decrease. As the amount of wrinkles decreases, so does the proportion (R_{black}).

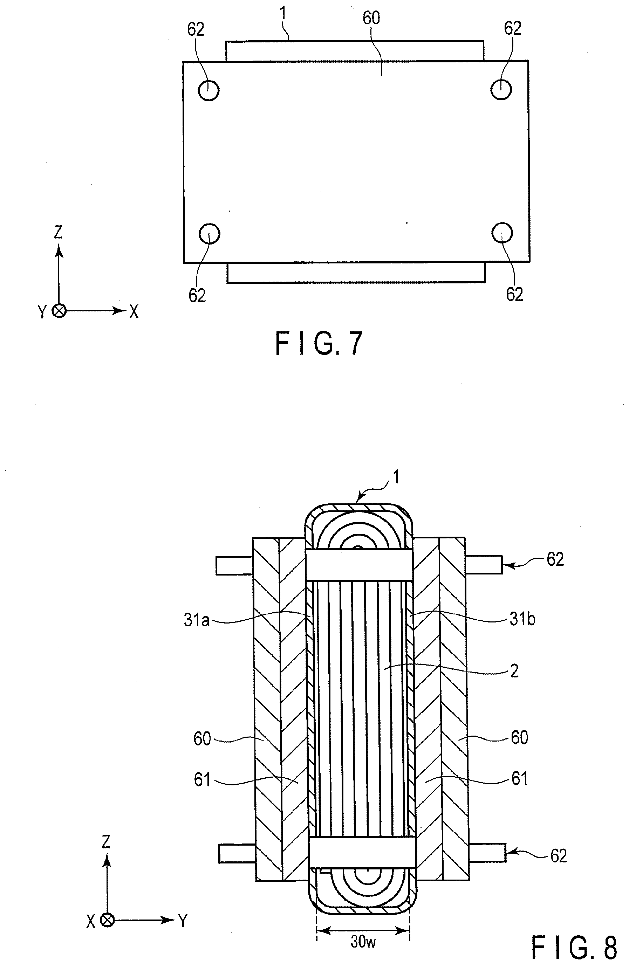

As one means for restraining the wound electrode group 2, for example, the wound electrode group 2 is restrained by using one or more restraining jigs 60 from the outside of the container member 1, as illustrated in FIGS. 7 and 8. FIG. 7 is a front view schematically illustrating a state where the secondary battery is restrained. FIG. 8 is a schematic side view illustrating a state in which the secondary battery is restrained, partially as a cross section.

In the cases illustrated in FIGS. 7 and 8, pressure is applied to the wound electrode group 2 through the pair of side walls (long-side side walls 31a and 31b) provided in the container member 1. In other words, the container member 1 is sandwiched by the one or more restraining jigs 60. Here, the pair of side walls included in the container member 1 are two side walls which the flat portion 2a of the wound electrode group 2 faces. Therefore, the pressure on the wound electrode group 2 is mainly applied to the flat portion 2a. The flat portion 2a of the wound electrode group 2 is illustrated in FIGS. 3 and 5.

An example of the restraining jig 60 is a metal plate made of a metal such as aluminum. In the examples illustrated in FIGS. 7 and 8, two restraining jigs 60 (here, an aluminum plates) each sandwich the container member 1 via a bake plate 61. The two restraining jigs 60 are fixed in a state where the container member 1 is pressurized toward a direction in which the restraining jigs 60 are close to each other by tightening the restraining means 62 such as bolts and nuts. The restraining jig 60 and the bake plate 61 may be provided with through holes (not illustrated) into which restraining means 62 such as bolts and nuts can be inserted, at predetermined positions.

As the bake plate 61, for example, a plate in which a resin such as a phenol resin is stacked on a base material such as paper or cloth can be used. A thickness of the bake plate 61 is, for example, 2 mm to 40 mm.

By interposing the bake plate 61 between the metal plate and the container member 1, it is possible to suppress the deformation of the metal plate when the container member 1 is restrained. Therefore, a uniform pressure can be applied to the container member 1 and therefore the flat portion 2a of the electrode group 2 accommodated in the container member 1.

As another means for restraining the wound electrode group 2, there is a method of reducing the width of the bottom wall 30 of the bottomed square tube type container 3 constituting the container member 1. When the width of the bottom wall 30 is adjusted for the purpose of changing the restraining force on the wound electrode group 2, a width 30w of the bottom wall 30 is adjusted in a direction orthogonal to the winding axis 2p of the wound electrode group 2. In the adjustment of the width 30w of the bottom wall 30, for example, the width on the short-side side of the rectangular bottom wall is reduced. In this case, the pressure applied to the wound electrode group 2 can be controlled without using the restraining jig 60. However, the restraining jig 60 may be further used. By reducing the width 30w of the bottom wall 30, the pressure applied to the wound electrode group 2 can be increased. In other words, the container member 1 can function as a restraining jig 60.

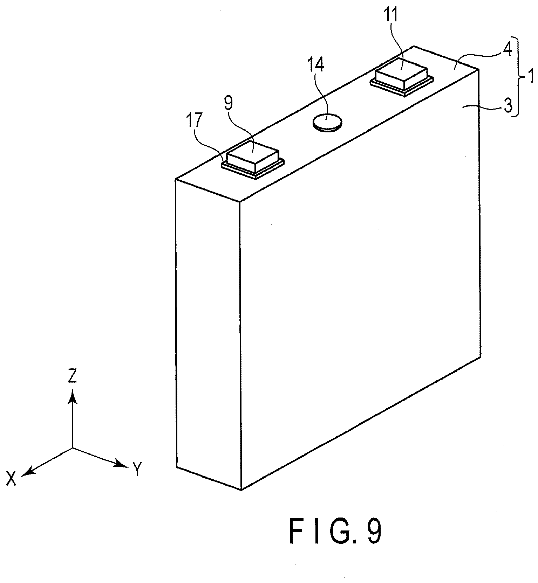

Here, the dimensions of the secondary battery (container member) according to an approach will be illustrated with reference to FIG. 9. FIG. 9 is a perspective view schematically illustrating the appearance of the secondary battery illustrated in FIGS. 1, 2, and 4. The dimensions of the container member are not particularly limited, and a width of the battery parallel to the X direction is, for example, in the range of 1 cm to 30 cm. A thickness of the battery parallel to the Y direction is, for example, in the range of 1 cm to 30 cm. The width of the bottom wall 30 described above may be the thickness of the battery parallel to the Y direction in FIG. 9. A height of the battery parallel to the Z direction is, for example, in the range of 1 cm to 30 cm. In FIG. 9, the X direction and the Y direction are orthogonal to each other, and the Z direction is a direction orthogonal to both the X direction and the Y direction.

Further, although not illustrated, as yet another means for restraining the wound electrode group 2, a spacer is inserted between the side wall of the container member 1 (for example, the side wall 31a) and the flat portion 2a of the wound electrode group 2. The spacer can be, for example, an elastic body such as an elastomer.

The initial charge conditions are not particularly limited, but are, for example, the following conditions. The secondary battery is charged at 25°C with a current value of 0.5 C to 2.0 C until the battery voltage reaches 2.0 V to 3.0 V. The current value during charge is shown in a unit such that the current value at which the SOC (State of Charge) becomes 0% in 1 hour when the secondary battery is discharged from the state where the SOC is 100% is 1 C.

After the initial charge, aging may be performed if necessary. By aging, for example, a protective film is formed on the surface of the negative electrode active material-containing layer and on the surface of the positive electrode active material-containing layer. In aging, for example, a battery in which the SOC is 20% to 100% is retained in a dryer kept at a temperature of, for example, 60°C to 120°C. The aging time is, for example, 10 to 60 hours. When the SOC of the battery during aging is increased, the aging temperature is increased, and/or the aging time is lengthened, the volume of the active material is changed by charge and stress is applied to the electrodes, so that the amount of wrinkles tends to increase.

Since an excessive amount of the film increases the battery resistance, appropriate aging is preferably performed. However, when the film is thick, there is an advantage that self-discharge can be easily reduced. After aging, the gas generated in the battery can be eliminated by opening the battery, if necessary. After this degassing, vacuuming may be performed arbitrarily, and then the battery is resealed.

When the secondary battery is subjected to aging with a large restraining force on the wound electrode group 2, the negative electrode, the separator, and the positive electrode have high adhesion, so that a film is easily formed. That is, if the amount of wrinkles is small after the initial charge, a film is easily formed during the subsequent aging. On the other hand, when the secondary battery is subjected to aging in a state where the restraining force on the wound electrode group 2 is small, there are places (wrinkles) where the adhesion among the negative electrode, the separator and the positive electrode is poor, so that, as compared with the case where the restraining force is large, a film is unlikely to be formed. By controlling the restraining force on the wound electrode group 2, the proportion (R_{black}) can be adjusted within the range of 0.10% or more and 2.0% or less. When the proportion (R_{black}) is within this range, a secondary battery with low self-discharge and low resistance can be obtained.

The restraint on the wound electrode group for adjusting the amount of wrinkles, that is, the proportion (R_{black}) may or may not be released after the initial charge and/or after the aging. In order to adjust the amount of wrinkles, the wound electrode group is desirably restrained at least during the initial charge and/or the aging. The expansion and contraction of the niobium-titanium composite oxide occurs also during repeated charge and discharge after the initial charge and/or the aging, but the effect on the proportion (R_{black}) associated with the expansion and contraction that occurs during repeated charge and discharge is small as compared with the effect on the proportion (R_{black}) during the initial charge and/or during the aging.

Subsequently, the details of each member included in the secondary battery will be described.

The secondary battery may further include an electrolyte retained in the wound electrode group. The wound electrode group and the electrolyte are housed in the container member. The secondary battery may further be provided with an electrode guard for avoiding electrical connection between the positive and negative electrodes and the container member.

The negative electrode, the positive electrode, the separator, the electrolyte, the container member, and the electrode guard included in the secondary battery will be described.

### (1) Negative electrode

The negative electrode can include a negative electrode current collector and a negative electrode active material-containing layer. The negative electrode active material-containing layer can be formed on one side or both sides of the negative electrode current collector. The negative electrode active material-containing layer may contain a negative electrode active material containing a niobium-titanium composite oxide, and optionally an electro-conductive agent and a binder.

The niobium-titanium composite oxide has, for example, a monoclinic crystal structure. The monoclinic niobium-titanium composite oxide is, for example, at least one selected from the group consisting of a composite oxide represented by the general formula LiₓTi_{1-y}M1_{y}Nb_{2-z}M2_{z}O_{7+δ} and a composite oxide represented by the general formula LiₓTi_{1_ y}M3_{y+z}Nb_{2-z}O_{7-δ}. Here, M1 is at least one selected from the group consisting of Zr, Si, and Sn. M2 is at least one selected from the group consisting of V, Ta, and Bi. M3 is at least one selected from Mg, Fe, Ni, Co, W, Ta, and Mo. The respective subscripts in the composition formulas satisfy 0 ≤ x ≤ 5, 0 ≤ y < 1, 0 ≤ z < 2, and -0.3 ≤ δ ≤ 0.3.

Specific examples of the monoclinic niobium-titanium composite oxide include Nb₂TiO₇, Nb₂Ti₂O₉, Nb₁₀Ti₂O₂₉, Nb₁₄TiO₃₇ and Nb₂₄TiO₆₂. The monoclinic niobium-titanium composite oxide may be a substituted niobium-titanium composite oxide in which at least a part of Nb and/or Ti is substituted with a heterogeneous element. Examples of substitution elements are Na, K, Ca, Co, Ni, Si, P, V, Cr, Mo, Ta, Zr, Mn, Fe, Mg, B, Pb and Al. The substituted niobium-titanium composite oxide may contain one kind of substitution element, or may contain two or more kinds of substitution elements.

The negative electrode active material may contain any other active material than the niobium-titanium composite oxide. Examples of such active materials can include lithium titanate having a ramsdellite structure (e.g., Li_{2+y}Ti₃O₇, 0 ≤ y ≤ 3) and lithium titanate having a spinel structure (e.g., Li₄₊ₓTi₅O₁₂, 0 ≤ x ≤ 3), monoclinic titanium dioxide (TiO₂(B)), anatase type titanium dioxide, rutile type titanium dioxide, hollandite type titanium composite oxide, and orthorhombic titanium dioxide-containing composite oxide.

Examples of the orthorhombic titanium-containing composite oxide include a compound represented by Li₂₊ₐM(I)_{2-b}Ti_{6-c}M(II)_{d}O_{14+σ}. Here, M(I) is at least one selected from the group consisting of Sr, Ba, Ca, Mg, Na, Cs, Rb and K. M(II) is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤d < 6, and -0.5 ≤ σ ≤ 0.5. Specific examples of the orthorhombic titanium-containing composite oxide include Li₂₊ₐNa₂Ti₆O₁₄ (0 ≤ a ≤ 6) .

A proportion of the niobium-titanium composite oxide in the negative electrode active material is, for example, 50% by mass or more, preferably 80% by mass or more.

The electro-conductive agent is blended in order to enhance the current collecting performance and suppress the contact resistance between the active material and the current collector. Examples of the electro-conductive agent include carbonaceous substances such as vapor grown carbon fiber (VGCF), carbon blacks such as acetylene black, graphite, carbon nanofibers and carbon nanotubes. One of these substances may be used as the electro-conductive agent, or two or more of them may be used as the electro-conductive agent in combination. Alternatively, instead of using the electro-conductive agent, a carbon coat or an electronically conductive inorganic material coat may be applied to the surfaces of the active material particles.

The binder is blended in order to fill the gaps between the dispersed active materials and to bind the active material and the negative electrode current collector. Examples of the binder include polytetrafluoroethylene (PTFE), polyvinylidene fluoride (PVdF), fluororubber, styrene butadiene rubber, polyacrylic acid compounds, imide compounds, carboxymethyl cellulose (CMC), and CMC salts. One of these substances may be used as the binder, or a combination of two or more may be used as the binder.

Blending proportions of the negative electrode active material, the electro-conductive agent and the binder in the negative electrode active material-containing layer can be appropriately changed depending on the use of the negative electrode. For example, it is preferable to blend the negative electrode active material, the electro-conductive agent and the binder in proportions of 70% by mass or more and 96% by mass or less, 2% by mass or more and 28% by mass or less, and 2% by mass or more and 28% by mass or less, respectively. By setting the amount of the electro-conductive agent to 2% by mass or more, the current collecting performance of the negative electrode active material-containing layer can be improved. Further, by setting the amount of the binder to 2% by mass or more, the binding property between the negative electrode active material-containing layer and the current collector becomes sufficient, and excellent cycle performance can be expected. On the other hand, it is preferable that the electro-conductive agent and the binder should each be 28% by mass or less, in order to increase the capacity.

The negative electrode current collector uses a material that is electrochemically stable at a potential at which lithium (Li) is inserted in and extracted from the active material, for example, at a potential noble than 1.0 V (vs. Li/Li⁺). For example, the current collector is preferably made of copper, nickel, stainless steel or aluminum, or an aluminum alloy containing one or more elements selected from Mg, Ti, Zn, Mn, Fe, Cu, and Si. A thickness of the current collector is preferably 5 µm or more and 20 µm or less. A current collector having such a thickness can balance the strength and weight reduction of the electrodes.

Further, the negative electrode current collector may include a portion where the negative electrode active material-containing layer is not formed on the surface thereof. This portion can serve as a negative electrode current-collecting tab.

A density of the negative electrode active material-containing layer (excluding the current collector) is preferably 1.8g/cm³ or more and 2.8g/cm³ or less. A negative electrode including the negative electrode active material-containing layer having a density within this range is excellent in energy density and electrolyte retention. The density of the negative electrode active material-containing layer is more preferably 2.1g/cm³ or more and 2.6g/cm³ or less.

The negative electrode can be produced, for example, by the following method. First, a slurry is prepared by suspending an active material, an electro-conductive agent and a binder in a solvent. This slurry is applied to one or both sides of the current collector. Then, the applied slurry is dried to obtain a stack of the active material-containing layer and the current collector. Then, the stack is pressed. In this way, the negative electrode is produced.

Alternatively, the negative electrode may be produced by the following method. First, an active material, an electro-conductive agent and a binder are mixed to obtain a mixture. The mixture is then molded into pellets. The negative electrode can then be obtained by disposing these pellets on the current collector.

### (2) Positive electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one kind of compound as the positive electrode active material, or include two or more kinds of compounds in combination. Examples of the oxide and sulfide include compounds capable of having Li and Li ions be inserted and extracted.

Examples of such compounds include manganese dioxides (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y < 1, and Li_{X}CoPO₄; 0 < x ≤ 1), iron sulfates [Fe₂(SO₄)₃], vanadium oxides (e.g., V₂O₅), and lithium nickel cobalt manganese composite oxides (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxides (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1). The positive electrode potential can be made high by using these positive electrode active materials.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably from 100 nm to 1 µm. The positive electrode active material having a primary particle size of 100 nm or more is easy to handle during industrial production. In the positive electrode active material having a primary particle size of 1 µm or less, diffusion of lithium ions within solid can proceed smoothly.

The specific surface area of the positive electrode active material is preferably from 0.1 m²/g to 10 m²/g. The positive electrode active material having a specific surface area of 0.1 m²/g or more can secure sufficient sites for inserting and extracting Li ions. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, imide compounds, carboxymethyl cellulose (CMC), and salts of CMC. One of these may be used as the binder, or two or more may be used in combination as the binder.

The electro-conductive agent is added to improve current collection performance and to suppress the contact resistance between the positive electrode active material and the positive electrode current collector. Examples of the electro-conductive agent include carbonaceous substances such as vapor grown carbon fiber (VGCF), carbon blacks such as acetylene black, graphite, carbon nanofibers and carbon nanotubes. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, the decomposition of an electrolyte can be reduced during storage under high temperatures.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface of the positive electrode current collector. This portion may serve as a positive electrode tab.

The positive electrode can be produced, for example, by the following method. First, a slurry is prepared by suspending an active material, an electro-conductive agent and a binder in a solvent. This slurry is applied to one or both sides of the current collector. Then, the applied slurry is dried to obtain a stack of the active material-containing layer and the current collector. Then, the stack is pressed. In this way, the positive electrode is produced.

Alternatively, the positive electrode may be produced by the following method. First, an active material, an electro-conductive agent and a binder are mixed to obtain a mixture. The mixture is then molded into pellets. The positive electrode can then be obtained by disposing these pellets on the current collector.

### (3) Separator

The separator is formed of, for example, a porous film containing polyethylene (polyethylene; PE), polypropylene (polypropylene; PP), cellulose, or polyvinylidene fluoride (PVdF), or a synthetic resin nonwoven fabric. From the viewpoint of safety, it is preferable to use a porous film formed from polyethylene or polypropylene. This is because these porous films can be melted at a predeterminedtemperature to interrupt the current.

As a separator, a solid electrolyte layer containing solid electrolyte particles can also be used. The solid electrolyte layer may contain one kind of solid electrolyte particles, or may contain a plurality of kinds of solid electrolyte particles. The solid electrolyte layer may be a solid electrolyte composite film containing solid electrolyte particles. The solid electrolyte composite film is, for example, formed by molding solid electrolyte particles into a film shape using a polymer material. The solid electrolyte layer may contain at least one selected from the group consisting of plasticizers and electrolyte salts. When the solid electrolyte layer contains an electrolyte salt, for example, the alkali metal ion conductivity of the solid electrolyte layer can be further enhanced.

Examples of the polymer material include polyetherbased, polyester-based, polyamine-based, polyethylenebased, silicone-based and polysulfide-based polymer materials.

As the solid electrolyte, it is preferable to use an inorganic solid electrolyte. Examples of the inorganic solid electrolyte include an oxide-based solid electrolyte and a sulfide-based solid electrolyte. As the oxide-based solid electrolyte, it is preferable to use a lithium phosphate solid electrolyte having a NASICON type structure and represented by the general formula LiM₂(PO₄)₃. M in the above general formula is preferably at least one kind of element selected from the group consisting of titanium (Ti), germanium (Ge), strontium (Sr), zirconium (Zr), tin (Sn), and aluminum (Al). It is more preferable that the element M contain any one element of Ge, Zr and Ti, and Al.

Specific examples of the lithium phosphate solid electrolyte having a NASICON type structure can include LATP (Li₁₊ₓAlₓTi₂₋ₓ(PO₄) ₃), Li₁₊ₓAlₓGe₂₋ₓ (PO₄)₃, and Li₁₊ₓAlₓZr₂-ₓ(PO₄)₃. In the above formulae, x is in the range of 0 <x ≤ 5, preferably in the range of 0.1 ≤ x ≤ 0.5. It is preferable to use LATP as the solid electrolyte. LATP has excellent water resistance and is less likely to cause hydrolysis in a secondary battery.

Further, as the oxide-based solid electrolyte, amorphous LIPON (Li_{2.9}PO_{3.3}N_{0.46}) or LLZ (Li₇La₃Zr₂O₁₂) having a garnet-type structure may be used.

### (4) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

### (5) Container member

As the material of the container member including the sealing plate, for example, aluminum, an aluminum alloy, iron (Fe), nickel (Ni)-plated iron, stainless steel (SUS), or the like can be used. When the positive and negative electrode terminals 9 and 11 are formed of aluminum or an aluminum alloy, aluminum or an aluminum alloy can be used for the positive and negative electrode leads 8 and 10.

### (6) Electrode guard

As the resin used in the electrode guard, any resin can be used as long as it is not easily attacked by the electrolytic solution. For example, polyethylene, polypropylene, an ethylene vinyl acetate copolymer, an ethylene vinyl acetate alcohol copolymer, an ethylene/acrylic acid copolymer, an ethylene/ethyl acrylate copolymer, an ethylene/methyl acrylate copolymer, an ethylene methacrylic acrylate copolymer, an ethylene/methyl methacrylate copolymer, an ionomer, polyacrylonitrile, polyvinylidene chloride, polytetrafluoroethylene, polychlorotrifluoroethylene, polyphenylene ether, polyethylene terephthalate, polytetrafluoroethylene, or the like can be used. One type of the above resins may be used alone, or a plurality of types thereof may be mixed for use. Above all, polypropylene or polyethylene is preferably used.

According to a first approach, a secondary battery is provided. The secondary battery includes a wound electrode group including a positive electrode, a negative electrode containing a negative electrode active material, and a separator, and a container member accommodating the wound electrode group. The negative electrode active material contains a niobium-titanium composite oxide. A proportion (R_{black}) determined by the following method is within the range of 0.10% or more and 2.0% or less. The proportion (R_{black}) is determined by a method including: obtaining 800 cross-sectional images orthogonal to a winding axis of the wound electrode group by X-ray CT; after converting each of the 800 cross-sectional images into monochrome 256 gradations, setting a threshold value and binarizing the 800 cross-sectional images so that portions corresponding to the positive electrode, the negative electrode, and the separator form white portions, and that a void portion that may exist inside the wound electrode group forms a black portion; determining a proportion of an area (Sb) of the black portion to an area (St) of the wound electrode group defined by an outer periphery of the wound electrode group in each of the binarized 800 cross-sectional images; and simply averaging a plurality of the proportions obtained in each of the 800 cross-sectional images. A secondary battery having a proportion (R_{black}) in the range of 0.10% or more and 2.0% or less has low self-discharge and low resistance.

### (Second approach)

According to a second approach, a battery module is provided. The battery module according to the second approach includes one or more secondary batteries according to the first approach. When the battery module includes a plurality of single batteries, each single battery is electrically connected in series, in parallel, or in combination of in series and in parallel.

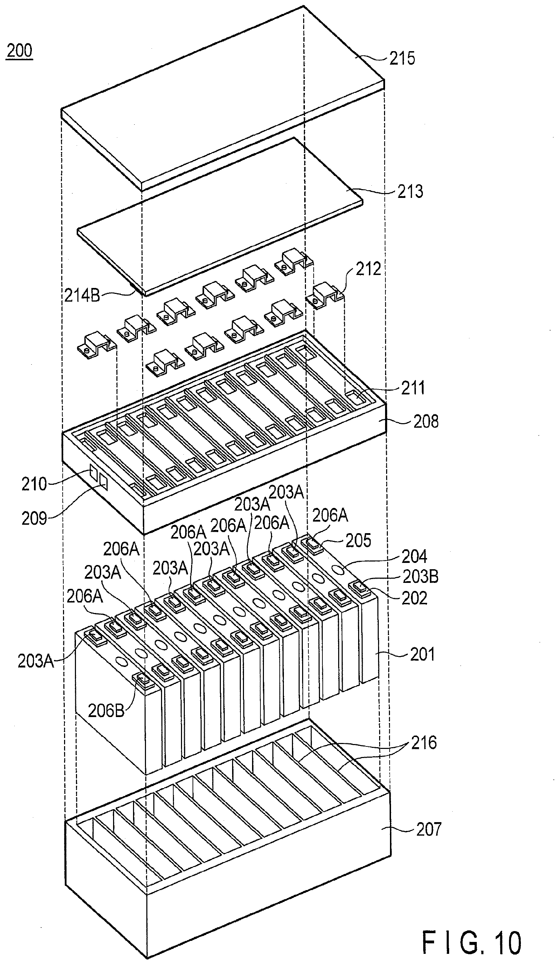

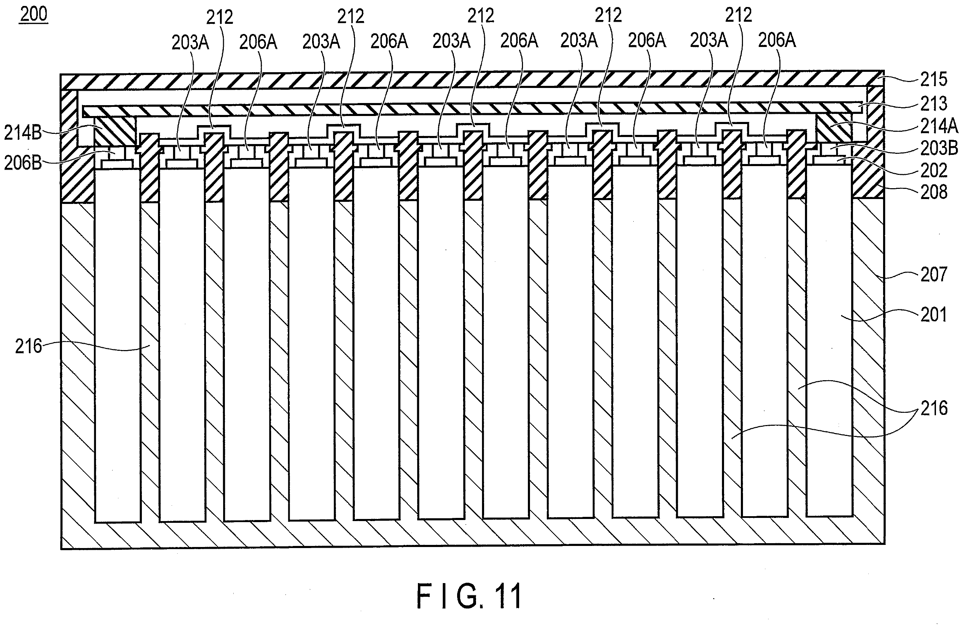

A battery module 200 will be specifically described with reference to the developed perspective view of FIG. 10 and the cross-sectional view of FIG. 11. In the battery module 200 illustrated in FIG. 10, the secondary battery 100 according to the first approach is used as a single battery 201. The cross-sectional view of FIG. 11 illustrates a cross section including the positive electrode terminal 203B and the negative electrode terminal 206B in the developed perspective view of FIG. 10.

The single batteries 201 are provided on the outside of an outer can of the battery with the positive electrode terminals 203 (203A and 203B) provided on positive electrode gaskets 202, sealing lids 204, and negative electrode terminals 206 (206A and 206B) provided on negative electrode gaskets 205. The single batteries 201 illustrated in FIG. 10 are disposed so as to be aligned in a staggered manner. Although the single batteries 201 illustrated in FIG. 10 are connected in series, they may be connected in parallel by changing the disposing method, or may be connected in combination of in series and in parallel.

The single batteries 201 are housed in a lower case 207 and an upper case 208. The lower case 207 includes partition walls 216 that separate the accommodation spaces for the single batteries 201 from each other. The upper case 208 is provided with power input/output terminals 209 and 210 (positive electrode terminal 209 and negative electrode terminal 210) of the battery module. The upper case 208 is provided with an opening 211 in line with the positions of the positive electrode terminal 203 and the negative electrode terminal 206 of the single battery 201, and the positive electrode terminal 203 and the negative electrode terminal 206 are exposed from an opening 211. The exposed positive electrode terminal 203A is connected to the negative electrode terminal 206A of the adjacent single battery 201 by a bus bar 212, and the exposed negative electrode terminal 206A is connected to the positive electrode terminal 203A of the adjacent single battery 201 on the opposite side to the above adjacent single battery 201 by the bus bar 212. The positive electrode terminal 203B not connected by the bus bar 212 is connected to a positive electrode terminal 214A provided on the substrate 213, and the positive electrode terminal 214A is connected to the power input/output terminal 209 of the positive electrode via a circuit on the substrate 213. Further, the negative electrode terminal 206B not connected by the bus bar 212 is connected to a negative electrode terminal 214B provided on the substrate 213, and the negative electrode terminal 214B is connected to the power input/output terminal 210 of the negative electrode via the circuit on the substrate 213.

The power input/output terminals 209 and 210 are connected to a charge power source and/or a load (not illustrated) to charge and use the battery module 200. The upper case 208 is sealed with a lid 215. The substrate 213 may be provided with a charge-discharge protective circuit. Further, a configuration may be added as appropriate, such as a configuration in which information such as deterioration of the single battery 201 can be output from a terminal (not illustrated).

Initial charge and/or aging of the single batteries 201 may be performed after assembling the battery module 200. At that time, by narrowing a distance between the partition walls 216 provided in the lower case 207, a restraining force can be applied to the single battery 201. For example, by reducing the width of the respective accommodation spaces in which the single batteries 201 are accommodated, a restraining force can be applied to the single batteries 201. The "width of the accommodation space" referred to herein refers to the width of the accommodation space along a direction in which the single batteries 201 are aligned.

According to a second approach, a battery module is provided. Therefore, the present approach can provide a battery module having low self-discharge and low resistance.

### (Third approach)

According to the third approach, a vehicle is provided. The vehicle includes the battery module according to the second approach.

In a vehicle according to the third approach, the battery module is configured, for example, to recover regenerative energy from motive force of the vehicle. The vehicle may include a mechanism configured to convert kinetic energy of the vehicle into regenerative energy.

Examples of the vehicle according to the third approach include two- to four-wheeled hybrid electric automobiles, two- to four-wheeled electric automobiles, electric assist bicycles, and railway cars.

In the vehicle, the installing position of the battery module is not particularly limited. For example, the battery module may be installed in the engine compartment of the vehicle, in rear parts of the vehicle, or under seats.

A plurality of battery modules is loaded on the vehicle. In this case, the batteries included in each of the battery modules may be electrically connected to each other in series, in parallel, or in a combination of in-series connection and in-parallel connection. Next, one example of the vehicle according to the third approach will be described with reference to the drawings.

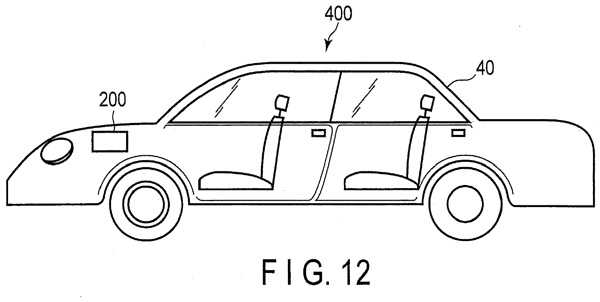

FIG. 12 is a partially transparent diagram schematically illustrating one example of a vehicle according to the approach.

A vehicle 400 illustrated in FIG. 12 includes a vehicle body 40 and a battery module 200 according to the approach. In the example illustrated in FIG. 12, the vehicle 400 is a four-wheeled automobile.

A plurality of the battery modules 200 may be loaded on the vehicle 400. In this case, the batteries included in the battery modules 200 (for example, unit cell or battery modules) may be connected in series, connected in parallel, or connected in a combination of in-series connection and in-parallel connection.

In FIG. 12, the battery modules 200 is installed in an engine compartment located at the front of the vehicle body 40. As described above, the battery modules 200 may be installed in rear sections of the vehicle body 40, or under a seat. The battery modules 200 may be used as a power source of the vehicle 400. In addition, the battery modules 200 can recover regenerative energy of a motive force of the vehicle 400.

A vehicle according to a third approach is mounted with the battery module according to the second approach. Therefore, the present approach can provide a vehicle mounted with a battery module having low self-discharge and low resistance.

### [Examples]

Examples will be described below, but the approaches are not limited to the examples which will be described below.

### (Example 1)

In Example 1, a secondary battery was produced according to the following procedures.

### <Production of positive electrode>

As a positive electrode active material, 90% by mass of LiNi_{0.5}Co_{0.2}Mn_{0.3}O₂ composite oxide having an average particle size of primary particles of 2 µm, 5% by mass of graphite powder as an electro-conductive agent, and 5% by mass of PVdF as a binder were blended. Then, the blend was dispersed in an N-methyl-2-pyrrolidone (NMP) solvent to prepare a slurry for forming an active material-containing layer. The above-described blending amounts are masses with respect to the mass of the positive electrode active material-containing layer, respectively. The prepared slurry was applied to both sides of an aluminum alloy foil (purity: 99.3%) having a thickness of 15 µm, and dried to obtain a stack. This stack was pressed to produce a positive electrode having a positive electrode active material-containing layer having a thickness of 40 µm.

### <Production of negative electrode>

As an active material, a monoclinic Nb₂TiO₇ (NTO) powder having an average particle size D₅₀ of 10 µm was prepared. As the material of the active material-containing layer, the active material particles, acetylene black powder as an electro-conductive agent, carboxymethyl cellulose (CMC) sodium salt powder as a thickener, and styrene butadiene rubber (SBR) as a binder were used. A blending ratio among these materials was NTO : acetylene black : CMC : SBR = 93 : 5 : 1 : 1 by mass. These materials were mixed in the following order while stirring pure water as a solvent to prepare a slurry. After the sodium carboxymethyl cellulose salt was dissolved in pure water, SBR was further mixed to obtain a dispersion. Acetylene black was dispersed in this dispersion, and finally NTO powder was dispersed and stirred to obtain a slurry. The obtained slurry was applied to one side of an aluminum alloy foil (purity 99.3%) having a thickness of 15 µm, and the film was dried to obtain a stack formed from a current collector and an active material-containing layer. This stack was pressed to prepare a negative electrode having an active material-containing layer having a thickness of 59 µm, and having an electrode density of 2.5 g/cm³.

### <Preparation of electrolyte>

A mixed solvent having a volume ratio of propylene carbonate to diethyl carbonate of 1 : 2 was prepared. Then, LiPF₆ was dissolved in this mixed solvent at a concentration of 1.2 M to prepare a liquid nonaqueous electrolyte.

### <Production of secondary battery>

The positive electrode obtained above, a separator as a nonwoven fabric having a thickness of 20 µm, and the negative electrode were stacked with the separator interposed therebetween so that the positive electrode active material-containing layer and the negative electrode active material-containing layer faced each other, to obtain a stack. Next, this stack was spirally wound so that the negative electrode was located on the outermost periphery to produce an electrode group. Winding was performed so that no unnecessary gap was generated between the sheets, while a certain tension was applied to each sheet. A flat electrode group was produced by heating and pressing the wound electrode group at 90°C.

The obtained electrode group was accommodated in a bottomed square tube type metal can made of stainless steel having a wall thickness of 0.25 mm. A bottom wall of the metal can was rectangular. A direction of the winding axis in the electrode group accommodated in the container member was a direction parallel to the bottom wall and parallel to the long-side side wall. A length of the bottom wall of the metal can in the short side direction was 22.0 mm. Since the thickness of each wall surface of a pair of long-side side walls of the container member was 0.25 mm as described above, a distance from an outer surface of one long-side side wall to an outer surface of the other long-side side wall was 22.5 mm. The metal can was equipped with a valve that leaked gas when an internal pressure was 2 atm or higher. A secondary battery, which had not been subjected to initial charge yet, was produced by introducing the electrolytic solution into the metal can and impregnating the electrode group with the electrolytic solution.

### <Attachment of restraining jig>

A restraining jig was attached to the produced secondary battery, which had not been subjected to initial charge yet, by the method described with reference to FIGS. 7 and 8. Specifically, the pair of long-side side walls of the container member were restrained from both sides by a bake plate and a metal plate as the restraining jigs. At this time, a restraint width from one bake plate to the other bake plate was 21.5 mm. In this way, a restraining force was applied to the secondary battery.

### <Initial charge and aging processing>

The restrained secondary battery, which had not been subjected to initial charge yet, was charged at 1 C at an environmental temperature of 25°C. Under these conditions, the secondary battery was charged to 2.5 V and the SOC was set to 100%. After that, aging treatment was performed for 24 hours in a temperature environment of 80°C. In this way, a secondary battery according to Example 1 was produced.

### (Example 2)

A secondary battery was produced in the same manner as in Example 1 except that the aging temperature was changed to 100°C.

### (Example 3)

A secondary battery was prepared in the same manner as in Example 1 except that the aging time was changed to 48 hours.

### (Example 4)

A secondary battery was produced by the same method as in Example 1 except that the restraint width was changed to 21.0 mm.

### (Example 5)

A secondary battery was produced by the same method as in Example 1 except that the restraint width was changed to 22.0 mm.

### (Example 6)

A secondary battery was produced by the same method as in Example 1 except that the restraint width was changed to 23.0 mm.

### (Example 7)

A secondary battery was produced by the same method as in Example 1 except that the direction of the winding axis in the electrode group accommodated in the container member was changed to a direction orthogonal to the bottom wall.

### (Example 8)

A secondary battery was prepared in the same manner as in Example 6 except that the aging time was changed to 48 hours.

### (Comparative Example 1)

A secondary battery was produced by the same method as in Example 1 except that the restraint width was changed to 20.0 mm.

### (Comparative Example 2)

A secondary battery was produced by the same method as in Example 1 except that the conditions were changed so that no restraining force was applied from the outside of the container member during aging.

### (Comparative Example 3)

A secondary battery was produced by the same method as in Example 1 except that Li₄Ti₅O₁₂ having an average particle size D₅₀ of 0.8 µm was used instead of Nb₂TiO₇ as the active material.

### (Comparative Example 4)

A secondary battery was produced by the same method as in Example 1 except that the restraint width was changed to 24.0 mm.

### <Obtainment and binarization of X-ray CT image>

X-ray CT imaging was performed on the secondary battery according to each example according to the method described in the first approach. Then, binarization processing was performed according to the method described in the first approach to calculate a "proportion (R_{black})". In Table 1 below, the "proportion (R_{black})" is displayed in the column "Black area proportion (R_{black}) (%)".

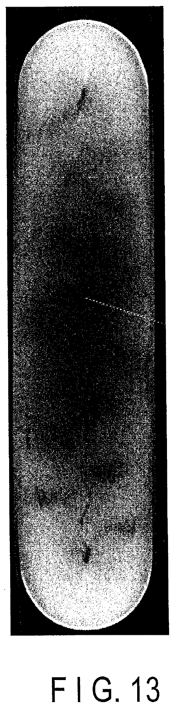

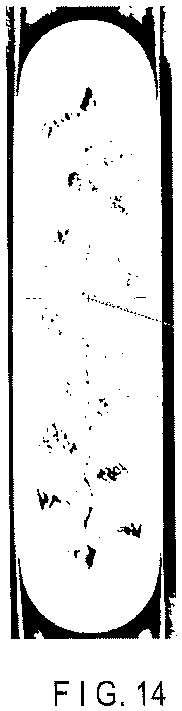

The X-ray CT image and the binarized image of a cross section orthogonal to the winding axis of the wound electrode group, obtained for Example 1, are as illustrated in FIGS. 5 and 6, respectively. As another example, the X-ray CT image and the binarized image of a cross section orthogonal to the winding axis of the wound electrode group, obtained for Comparative Example 1, are illustrated in FIGS. 13 and 14, respectively. In FIGS. 13 and 14 according to Comparative Example 1, it can be seen that relatively large wrinkles (black portions) are scattered.

### <Open circuit voltage measurement>

The secondary batteries produced in each example were charged until the SOC reached 50% (2.25 V), and allowed to stand for 24 hours. The voltage of the secondary battery after standing was measured in a state where no current or voltage was applied.

### <0.2-second DC resistance measurement>

First, the SOC of the secondary battery produced in each example was adjusted to 50%. Next, the current is applied for 0.2 seconds in each of three steps, with the following predetermined current values. The current values are 20 A for the first step, 100 A for the second step, and 200 A for the third step. For each step, DC resistance is estimated from a voltage difference before and after the current is applied, and an average value of these values is defined as "0.2-second DC resistance".

### <Self-discharge measurement>

The secondary battery produced in each example was charged to 2.5 V in a temperature environment of 25°C, left to stand for one week, and an amount [mAh] of decrease in capacity after one week was measured. The smaller the "self-discharge amount" in Table 1 below, the better the self-discharge characteristics of the corresponding secondary battery.

The above results are summarized in Table 1.

**[Table 1]**

| Table 1 | Negative electrode active material composition | Aging time (h) | Aging temperature (°C) | SOC (%) during aging | Length (mm) of bottom wall short side of container member | Restraint width (mm) | Presence or absence of restraining force during aging | Direction of winding axis to bottom wall | Black area proportion (R_{black}) (%) | Open circuit voltage (V) | 0.2-second DC resistance (mΩ) | Self-discharge amount [mAh] |
|---|---|---|---|---|---|---|---|---|---|---|---|---|
| Example 1 | Nb₂TiO₇ | 24 | 80 | 100 | 22.0 | 21.5 | Present | Parallel | 0.30% | 2.24 | 1.00 | 0.98 |
| Example 2 | Nb₂TiO₇ | 24 | 100 | 100 | 22.0 | 21.5 | Present | Parallel | 0.15% | 2.23 | 0.99 | 0.99 |
| Example 3 | Nb₂TiO₇ | 48 | 80 | 100 | 22.0 | 21.5 | Present | Parallel | 0.50% | 2.24 | 0.99 | 0.98 |
| Example 4 | Nb₂TiO₇ | 24 | 80 | 100 | 22.0 | 21.0 | Present | Parallel | 0.56% | 2.23 | 0.97 | 1.00 |
| Example 5 | Nb₂TiO₇ | 24 | 80 | 100 | 22.0 | 22.0 | Present | Parallel | 0.80% | 2.22 | 0.98 | 1.00 |
| Example 6 | Nb₂TiO₇ | 24 | 80 | 100 | 22.0 | 23.0 | Present | Parallel | 1.50% | 2.24 | 0.99 | 0.98 |
| Example 7 | Nb₂TiO₇ | 24 | 80 | 100 | 22.0 | 21.5 | Present | Orthogonal | 0.32% | 2.23 | 1.01 | 0.97 |
| Example 8 | Nb₂TiO₇ | 48 | 80 | 100 | 22.0 | 21.5 | Present | Orthogonal | 0.40% | 2.23 | 1.02 | 0.97 |
| Comparative Example 1 | Nb₂TiO₇ | 24 | 80 | 100 | 22.0 | 20.0 | Present | Parallel | 0.05% | 2.24 | 1.12 | 0.96 |
| Comparative Example 2 | Nb₂TiO₇ | 24 | 80 | 100 | 22.0 | - | Absent | Parallel | 5.0% | 2.22 | 0.91 | 2.00 |
| Comparative Example 3 | Li₄Ti₅O₁₂ | 24 | 80 | 100 | 22.0 | 21.5 | Present | Parallel | 0.05% | 2.24 | 1.30 | 0.94 |
| Comparative Example 4 | Nb₂TiO₇ | 24 | 80 | 100 | 22.0 | 24.0 | Present | Parallel | 2.25% | 2.23 | 0.93 | 1.80 |

From Table 1, the following can be seen.

Comparing Examples 1 to 8 using Nb₂TiO₇ as the negative electrode active material with Comparative Examples 1 and 2, Examples 1 to 8 in which the proportion (R_{black}) of the area of the black portion to the cross-sectional area of the wound electrode group was in the range of 0.10% or more and 2.0% or less exhibited a high open circuit voltage, a low resistance value, and also a small self-discharge amount.

As shown in Comparative Example 1, when the black area proportion (R_{black}) is less than 0.10%, the adhesion between the positive and negative electrodes is very high. Therefore, it is considered that an excessive amount of a film is formed on the surfaces of the positive and negative electrodes due to a side reaction with the electrolytic solution. As a result, the resistance value of the secondary battery according to Comparative Example 1 was high. Further, when the black area proportion exceeded 2.0% as in Comparative Examples 2 and 4, the battery resistance was low but the self-discharge amount was excessively large because no sufficient film was formed on the surfaces of the positive and negative electrodes.

Comparative Example 3 is an example not containing any niobium-titanium composite oxide. Comparative Example 3 is an example in which Li₄Ti₅O₁₂, which is unlikely to cause expansion and contraction of the active material due to charge and discharge, is used instead of the niobium-titanium composite oxide. When Li₄Ti₅O₁₂ is used, wrinkles inside the wound electrode group are unlikely to occur, so that the life characteristics and battery resistance are not easily affected by the control of the amount of wrinkles (proportion (R_{black})).

According to at least one approach and example described above, a secondary battery is provided. The secondary battery includes a wound electrode group including a positive electrode, a negative electrode containing a negative electrode active material, and a separator, and a container member accommodating the wound electrode group. The negative electrode active material contains a niobium-titanium composite oxide. A proportion (R_{black}) determined by the following method is within the range of 0.10% or more and 2.0% or less. The proportion (R_{black}) is determined by a method including: obtaining 800 cross-sectional images orthogonal to a winding axis of the wound electrode group by X-ray CT; after converting each of the 800 cross-sectional images into monochrome 256 gradations, setting a threshold value and binarizing the 800 cross-sectional images so that portions corresponding to the positive electrode, the negative electrode, and the separator form white portions, and that a void portion that may exist inside the wound electrode group forms a black portion; determining a proportion of an area (Sb) of the black portion to an area (St) of the wound electrode group defined by an outer periphery of the wound electrode group in each of the binarized 800 cross-sectional images; and simply averaging a plurality of the proportions obtained in each of the 800 cross-sectional images. This secondary battery has low self-discharge and low resistance.

The present disclosure also encompasses the following approaches:
1. A secondary battery (100) comprising:
   a wound electrode group (2) comprising a positive electrode (5), a negative electrode (6) comprising a negative electrode active material, and a separator (7); and
   a container member (1) that accommodates the wound electrode group (2),
   the negative electrode active material comprising a niobium-titanium composite oxide, and
   a proportion (R_{black}) being in the range of 0.10% or more and 2.0% or less,
   wherein the proportion (R_{black}) is determined by a method comprising:
      obtaining 800 cross-sectional images orthogonal to a winding axis of the wound electrode group (2) by X-ray Computed Tomography (hereinafter referred to as X-ray CT);
      after converting each of the 800 cross-sectional images into monochrome 256 gradations, setting a threshold value and binarizing the 800 cross-sectional images so that portions corresponding to the positive electrode (5), the negative electrode (6), and the separator (7) form white portions, and that a void portion that may exist inside the wound electrode group (2) forms a black portion;
      determining a proportion of an area (Sb) of the black portion to an area (St) of the wound electrode group (2) defined by an outer periphery of the wound electrode group (2) in each of the binarized 800 cross-sectional images; and
      simply averaging a plurality of the proportions obtained in each of the 800 cross-sectional images.
2. The secondary battery (100) according to clause 1, wherein the proportion (R_{black}) is in the range of 0.15% to 1.50%.
3. The secondary battery (100) according to clause 1 or 2,
   wherein the container member (1) comprises a container (3) having a bottomed square tube shape and a sealing plate (4),
   the container (3) comprises a bottom wall (30) and a plurality of side walls (31, 32) extending from a peripheral edge of the bottom wall (30) in a direction orthogonal to the bottom wall (30), and
   the winding axis (2p) of the wound electrode group (2) extends in parallel with the bottom wall (30).
4. The secondary battery (100) according to clause 3,
   wherein the bottom wall (30) has a rectangular shape,
   the side walls (31, 32) comprise two long-side side walls corresponding to long-side sides of the bottom wall (30) and two short-side side walls corresponding to short-side sides of the bottom wall (30), and
   the winding axis (2p) of the wound electrode group (2) extends in parallel with the two long-side side walls.
5. The secondary battery (100) according to any one of clauses 1 to 4,
   wherein the niobium-titanium composite oxide is at least one selected from the group consisting of a composite oxide represented by the general formula LiₓTi_{1-y}M1_{y}Nb_{2-z}M2_{z}O_{7+δ} and a composite oxide represented by the general formula LiₓTi_{1-y}M3_{y+z}Nb_{2-z}O_{7-δ},
   the M1 is at least one selected from the group consisting of Zr, Si, and Sn, the M2 is at least one selected from the group consisting of V, Ta, and Bi, and the M3 is at least one selected from the group consisting of Mg, Fe, Ni, Co, W, Ta, and Mo, and
   the x satisfies 0 ≤ x ≤ 5, the y satisfies 0 ≤ y < 1, the z satisfies 0 ≤ z < 2, and the δ satisfies -0.3 ≤ δ ≤ 0.3.
6. A battery module (200) comprising the secondary battery (100) according to any one of clause 1 to 5.
7. The battery module (200) according to clause 6, further comprising a plurality of the secondary battery (100), wherein the secondary batteries (100) are electrically connected in series, in parallel, or in combination of in series and in parallel.
8. A vehicle (400) comprising the battery module (200) according to clause 6 or 7.
9. The vehicle (400) according to clause 8, comprising a mechanism configured to convert kinetic energy of the vehicle (400) into regenerative energy.
   While certain approaches have been described, these approaches have been presented by way of example only, and are not intended to limit the scope of the claims. Indeed, the secondary batteries described herein may be embodied in a variety of other forms; furthermore, various omissions, substitutions and changes in the form of the secondary batteries described herein may be made.

## Claims

1. A secondary battery (100) comprising:
a wound electrode group (2) comprising a positive electrode (5), a negative electrode (6) comprising a negative electrode active material, and a separator (7); and
a container member (1) that accommodates the wound electrode group (2),
the negative electrode active material comprising a niobium-titanium composite oxide, and
a proportion (R_{black}) being in the range of 0.10% or more and 2.0% or less,
wherein the proportion (R_{black}) is determined by a method comprising:
obtaining 800 cross-sectional images orthogonal to a winding axis of the wound electrode group (2) by X-ray Computed Tomography (hereinafter referred to as X-ray CT);
after converting each of the 800 cross-sectional images into monochrome 256 gradations, setting a threshold value and binarizing the 800 cross-sectional images so that portions corresponding to the positive electrode (5), the negative electrode (6), and the separator (7) form white portions, and that a void portion that may exist inside the wound electrode group (2) forms a black portion;
determining a proportion of an area (Sb) of the black portion to an area (St) of the wound electrode group (2) defined by an outer periphery of the wound electrode group (2) in each of the binarized 800 cross-sectional images; and
simply averaging a plurality of the proportions obtained in each of the 800 cross-sectional images.

2. The secondary battery (100) according to claim 1, wherein the proportion (R_{black}) is in the range of 0.15% to 1.50%.

3. The secondary battery (100) according to claim 1 or 2,
wherein the container member (1) comprises a container (3) having a bottomed square tube shape and a sealing plate (4),
the container (3) comprises a bottom wall (30) and a plurality of side walls (31, 32) extending from a peripheral edge of the bottom wall (30) in a direction orthogonal to the bottom wall (30), and
the winding axis (2p) of the wound electrode group (2) extends in parallel with the bottom wall (30).

4. The secondary battery (100) according to claim 3,
wherein the bottom wall (30) has a rectangular shape,
the side walls (31, 32) comprise two long-side side walls corresponding to long-side sides of the bottom wall (30) and two short-side side walls corresponding to short-side sides of the bottom wall (30), and
the winding axis (2p) of the wound electrode group (2) extends in parallel with the two long-side side walls.

5. The secondary battery (100) according to any one of claims 1 to 4,
wherein the niobium-titanium composite oxide is at least one selected from the group consisting of a composite oxide represented by the general formula LiₓTi_{1-y}M1_{y}Nb_{2-z}M2_{z}O_{7+δ} and a composite oxide represented by the general formula LiₓTi_{1-y}M3_{y+z}Nb_{2-z}O_{7-δ,}
the M1 is at least one selected from the group consisting of Zr, Si, and Sn, the M2 is at least one selected from the group consisting of V, Ta, and Bi, and the M3 is at least one selected from the group consisting of Mg, Fe, Ni, Co, W, Ta, and Mo, and
the x satisfies 0 ≤ x ≤ 5, the y satisfies 0 ≤ y < 1, the z satisfies 0 ≤ z < 2, and the δ satisfies -0.3 ≤ δ ≤ 0.3.

6. A battery module (200) comprising the secondary battery (100) according to any one of claims 1 to 5.

7. The battery module (200) according to claim 6, further comprising a plurality of the secondary battery (100), wherein the secondary batteries (100) are electrically connected in series, in parallel, or in combination of in series and in parallel.

8. A vehicle (400) comprising the battery module (200) according to claim 6 or 7.

9. The vehicle (400) according to claim 8, comprising a mechanism configured to convert kinetic energy of the vehicle (400) into regenerative energy.
